# EUROPEAN PATENT APPLICATION

(11) **EP 3 859 634 A1**
(43) Date of publication of application: **04.08.2021**
(21) Application number: 21152939.1
(22) Date of filing: 22.01.2021
(51) Int. Cl.: G06Q 10/10, G06Q 10/06

(54) **METHOD FOR MONITORING THE PROGRESS STATE OF A COMPANY PROJECT AND ASSOCIATED DEVICE**

(30) Priority: 28.01.2020 IT 202000001540
(71) Applicant: Grownnectia S.r.l., 00148 Roma (RM) (IT)
(72) Inventor: CIAGLIA, MASSIMO, I-00148 ROMA (RM) (IT)
(74) Representative: Fiammenghi, Eva

(57) **Abstract**

Method for monitoring the progress state of a company project comprising:
(A) request for intervention;
(B) first meeting, with delivery of a monitoring device (1) to be installed at the company headquarters and supply of portable electronic devices (9'-9") to all partners (100);
(C) first document delivery of the business model;
(D) definition of the business model;
(E) second document delivery of the final version of the business model;
(F) delivery of the financial analysis based on the previously prepared business model;
(G) updating;
(H) third document delivery of "investor deck" consisting of business plan, financial plan, executive summary, pitch deck and teaser;
(I) updating;
(L) final delivery.

## Description

### Field of the invention

The present invention relates to the field of electronic devices and control and monitoring methods implemented through such devices. More specifically, it relates to a new electronic device specifically designed to allow the partners of a company to know in real time at what stage the project they are working on is at, avoiding meetings and continuous clarifications to share this data clearly.

More particularly, the present invention provides that the activities aimed at company growth are directed and coordinated by a team of professionals who coordinate the various steps of the method and the activities to be carried out.

### Prior art

Every year thousands of new startups are founded, dealing with the most disparate sectors, from catering to information technology, from transport to the organization of events and so on. Many of these are also "innovative", in the sense in which they are holders of industrial property rights or among its members there are PhDs, since the sector they deal with is particularly new and unexplored.

However, despite this swarming of new companies every year, around 90% of them close up within a short time. The causes are certainly multiple; the misunderstandings between the partners or their inexperience, the lack of an overview, the absence of a real free position on the market or, much more often, the absence of funds.

To the aid of new companies there are numerous loans, including non-repayable loans, which the various national territorial bodies and the European Union put out every year. However, obtaining these loans is not entirely simple and accessible. Companies, in the first place, are often not even aware of their existence, secondly it frequently happens that there is no company figure dedicated to obtaining the necessary requirements for the assignment of these tenders. A person specifically dedicated to this has proved to be of vital importance for a long life of the company, as demonstrating the requisites necessary for the assignment is by no means simple.

In support of this activity of the startups, new consultancy figures have been created that help partners to pursue their objectives both through incubation and acceleration programs, and with targeted marketing campaigns, and by helping them to participate in tenders, and by helping them to draft important documents to be effectively presented to potential lenders, including business plans and pitch decks.

It follows that the survival or otherwise of a startup, or rather its landing on the market and possibly its success, in many cases depends largely on the work of the aforementioned external consultants.

What startup partners would need, more than external consultants, is a standardized system or method to share, always, in real time, what is the progress of the project and at what point is the timeline of the activities programmed and in what percentage the set objectives have been achieved, through a scientific method based on standardized KPIs and metrics. This would avoid numerous meetings and "points of the situation" which increase the risk of confusion and cause a lot of energy and time to be wasted.

The object of the present invention, in fact, is precisely that of proposing an electronic device at the service of startups that always keeps the partners, and the team of external consultants who follow them, up to date, on what is the "point of the situation" with reference to any project, in particular the production of presentation documents to investors.

### Description of the invention

According to the present invention, a method for monitoring the progress of a project state of a company is described which effectively solves the above problems.

This method has the advantage of allowing the partners of any company or firm to know in real time the deadlines and objectives to be completed in order to achieve objectives. These objectives, in particular, are set by a team of professionals experienced in business growth strategies and growth hacking strategies.

This team will consist of at least the following professional figures:
- a coach with the role of project manager and for managing the entire process;
- an operative team comprising at least:
   - a business advisor adapted to redact the business plan and the documentation accompanying the investor deck;
   - a marketing specialist adapted to provide consulting regarding growth strategy;
   - a mentor adapted to plan and decide which is the best strategy to adopt, in accordance with the business advisor and the marketing specialist;
- a support team comprising at least:
   - a junior advisor with role of reporting each meeting, market analysis and preparation of the base of the business model;
   - a graphic designer and/or video maker, adapted to prepare the material in a captivating manner in light of the presentation to possible investors.

In case of particular business needs, depending on the market sector in which it operates, the skills of the partners, the business project to be launched, the team of professionals can advantageously be expanded with additional professional figures, such as, by way of non-limiting example:
- a "supercoach", adapted to provide a pre-established number of lesson hours and tutoring on various subjects, close to his/her own sector work experience;
- an accountant, adapted to provide accounting assistance;
- a growth hacker, adapted to provide consulting for company growth with limited budgets and early-stage;
- an intellectual property consultant, adapted to provide assistance in terms of trademarks, patents and design;
- a lawyer, adapted to provide assistance on legal and compliance subjects;
- an SEO, adapted to provide consulting in order to increase the online visibility of the company;
- various tutors, adapted to train the partners during the process regarding the main subjects tied to the startup and marketing world;
- a web developer, adapted to provide services of implementation of the online presence of the company;
- a financial advisor, adapted to consult on financial matters;
- a digital strategist, adapted to plan the marketing and online advertising campaigns.

Advantageously, the various steps of monitoring and tutoring of the company by said team of professionals preferably take place according to predefined deadlines starting from "day 0", i.e. from the first contact between the startup and the team. Preferably, the method steps described below will be completed within 45 days of the first contact.

The main steps of the method object of the present invention are:
(A) request for intervention from said team of professionals (day 0);
(B) first meeting, during which the partners are given a monitoring device to be installed at their company headquarters (which will be better described in the detailed description) and portable electronic devices are provided to all partners and members of the professional team. During this first meeting, the objectives of the company are defined, operating on pre-established processes that will include, but are not limited to: problem, customer development, value proposition, assumption, business model, marketing, financial plan, intellectual property, team, operations, traction and fund raising;
(C) first document delivery; during which the team of professionals provides the partners with the draft of the business model and the minutes of the meeting (drawn up by the junior advisor) in an editable format for joint management. In this step, information and updating documents on topics of interest to the company are advantageously transmitted, preferably by e-mail;
(D) defining the business model by means of a plurality of meetings or calls with dedicated professionals;
(E) second document delivery, in which the team of professionals provides the partners with the final version of the business model;
(F) delivery of the financial analysis, in which the team of professionals provides to the partners the final version of the financial analysis based on the previously redacted business model;
(G) updating step through a plurality of meetings or calls;
(H) third document delivery, in which the team of professionals provides, to the partners, the final version of the "investor deck" comprising:
   - business plan and financial plan;
   - executive summary, or a summary document of the business plan in a few pages, to be delivered to potential investors;
   - "pitch deck" or a presentation of summary slides of the business idea, always with the aim of intriguing potential investors;
   - privacy agreement;
   - "teaser", or a page of key information, presented in an engaging way, to intrigue the reader;
   - any further useful documentation;
(I) further update;
(L) final delivery of the final version of the documents previously sent in said third step of document delivery (day 45).

Advantageously, the method can also comprise at least one of the following optional steps, subsequent to the final delivery step L and with a predetermined delivery time, preferably 135 days:
(M) launching and tutoring of the company, by said team of professionals through additional activities tailored to the company profile and the identified growth needs;
(N) organization of meetings or calls with a predefined deadline (preferably every 2 months), with at least one member of said team of professionals to verify the correspondence between business forecasts and reality and to identify any problems at the outset.

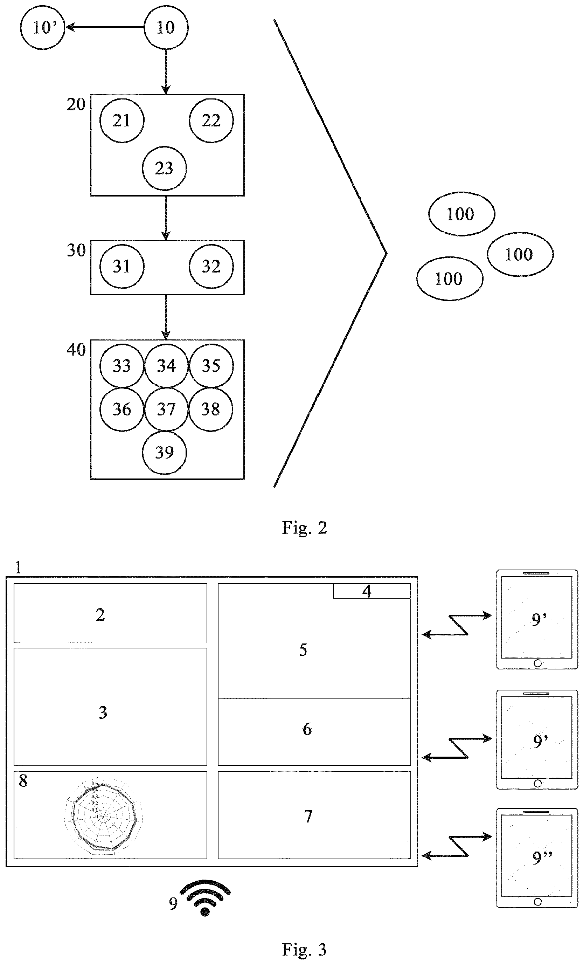

The additional activities that can be programmed in step M can be, by way of example but not limited to:
- Creation of the company team; consisting, but not limited to, the steps of:
   (A') meeting for the analysis of the components of the company team and for the definition of the new necessary resources;
   (B') creation of a descriptive profile of the type of work requested;
   (C') publication of the job offer;
   (D') monitoring of the results of the published offer and selection of candidates;
   (E') choice of any new recruitment channels;
   (F') publication of nominations;
   (G') definition of the rules of engagement and partners' agreements;
   (H') monitoring the results of new resources and closing the team.
- Problem solution fit; consisting, but not limited to, the steps of:
   (A") initial meeting with definition of validation strategies;
   (B") development of specific questionnaires;
   (C") questionnaire validation meeting;
   (D") data collection from the company;
   (E") final results analysis meeting.
- MVP development; consisting, but not limited to, the steps of:
   (A''') initial meeting to establish the MVP to be developed;
   (B''') discussion and approval;
   (C''') development of the MVP;
   (D''') meeting for video strategy development;
   (E''') video development;
   (F''') video validation;
   (G''') video testing;
   (H''') video publication.
- Product market fit; consisting, but not limited to, the steps of:
   (A^{iv}) Sean Ellis test definition;
   (B^{iv}) test development;
   (C^{iv}) test validation meeting;
   (D^{iv}) interview by the company;
   (E^{iv}) final results analysis meeting.
- Academy; consisting, but not limited to, the steps of:
   (A^{v}) definition of the training plan;
   (B^{v}) startup course;
   (C^{v}) course on "design thinking";
   (D^{v}) course on advertising through Facebook and Google or other channels;
   (E^{v}) "financial and BP" course;
   (F^{v}) course on social and SEO channels;
   (G^{v}) course for business creation, fund raising and team creation;
   (H^{v}) inbound marketing course;
   (I^{v}) pitching course;
   (L^{v}) mastermind: that is a format through which various startups meet, sharing their experiences and finding common solutions;
   (M^{v}) Google analytics course.
- Branding-marketing; consisting, but not limited to, the steps of:
   (A^{vi}) name definition and proposed acquisition;
   (B^{vi}) name approval;
   (C^{vi}) domain registration and opening social channels;
   (D^{vi}) meeting for the definition of logo and graphics;
   (E^{vi}) sending logo proposals to the company;
   (F^{vi}) logo delivery;
   (G^{vi}) strategic meeting for naming analysis;
   (H^{vi}) definition of web team with graphic designer and programmer;
   (I^{vi}) meeting with the company for the development of the landing page;
   (L^{vi}) copy and text production;
   (M^{vi}) UI/UX development and social graphics;
   (N^{vi}) opening social channels;
   (O^{vi}) landing page monitoring;
   (P^{vi}) meeting with mentor for landing page results;
   (Q^{vi}) meeting with the company for the landing page results;
   (R^{vi}) landing page test report;
   (S^{vi}) opening of e-mails;
   (T^{vi}) publishing and analytics;
   (U^{vi}) posting of social media channels with coordinated graphics;
   (V^{vi}) meeting for the definition of inbound marketing strategy;
   (Z^{vi}) meeting for the definition of the editorial plan;
   (AA^{vi}) support for the revision of articles from an SEO perspective;
   (BB^{vi}) definition of metrics to be used;
   (CC^{vi}) A.A.A.R.R.R. funnel monitoring with sprint one every 15 days;
   (DD^{vi}) launch of Adv campaigns by the company;
   (EE^{vi}) meeting for the definition *of* Facebook and Google campaigns (or other channel);
   (FF^{vi}) final meeting.
- Mentor: consisting of support that the mentor gives to the startup and monthly mentor reviews that produce a report with a series of indicators, preferably 12, equal to the blocks of the monitoring system and including some dashboards including a radar as shown in Fig. 3.
- Fund raising; consisting at least of the steps of meeting with a financial advisor; presentation at a "pitch day" in which the company proposes its idea to potential investors.
- Super coaching; consisting of at least a plurality of meetings, preferably at least 3 meetings with a super coach.
- Compliance and intellectual property; consisting of meetings with a lawyer.

Among the advantages of the monitoring method described so far is the presence of dedicated electronic devices on which at least one App has been previously downloaded and installed that allows: the sharing of documents and information; a working Gantt; a chat and collaboration platform; a project cost accounting system; a videoconferencing system, both locally, between the various partners of the company and between the various members of the professional team, and between these two realities (company and professionals).

The electronic devices supplied to each person involved in the above method can advantageously be common tablets.

For the details of the operation and features of the electronic device to be installed in the company headquarters, please refer to the following paragraph of the detailed description of the invention.

The advantages offered by the present invention are clear in the light of the above description and will be even clearer from the accompanying figures and the related detailed description.

### Description of the figures

The invention will hereinafter be described in at least one preferred embodiment thereof by way of non-limiting example with the aid of the accompanying figures, in which:

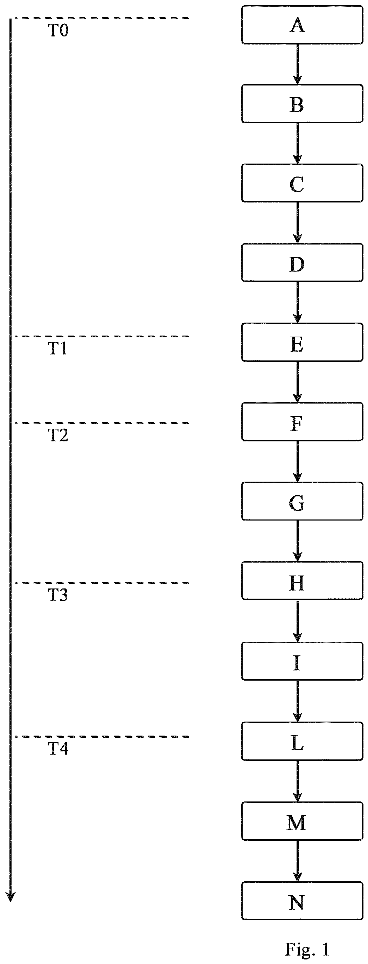

- FIGURE 1 shows the flow chart of the more complete version of the method object of the present invention, with the lateral timeline;
- FIGURE 2 schematically illustrates the relationships between the users involved in the method; on the right, with the reference numeral 100, the partners of the company requesting the service are indicated;
- FIGURE 3 shows the electronic device 1 accompanying the method of the present invention. The possibility of exchanging data to and from the electronic devices 9'-9" of partners 100 and professionals involved is illustrated;

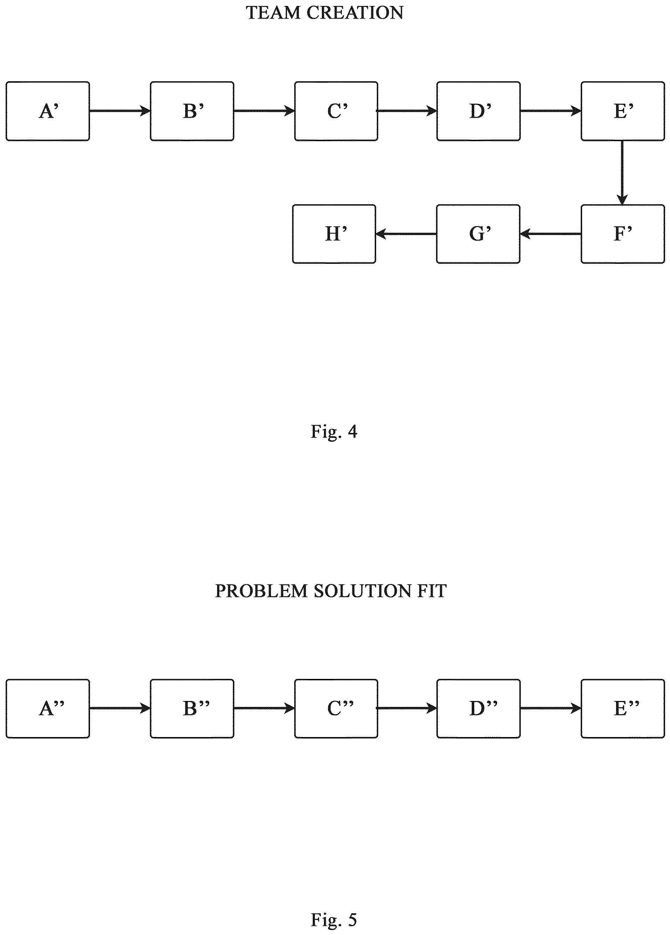

- FIGURE 4 shows the flowchart of the additional team creation development program;
- FIGURE 5 shows the flow chart of the additional "problem solution fit" development program;

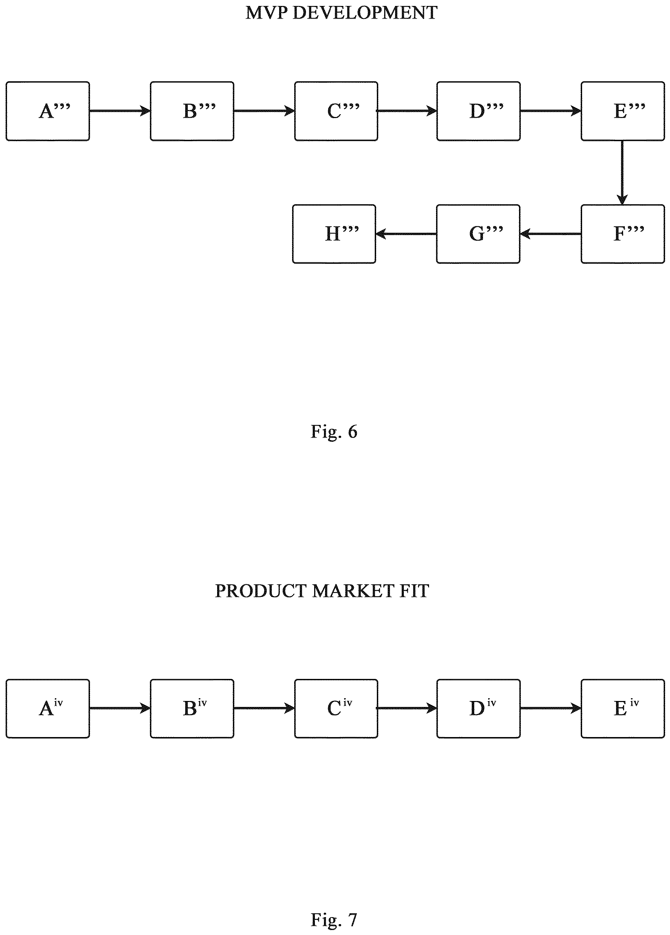

- FIGURE 6 shows the flow diagram of the additional "MVP development" development program;
- FIGURE 7 shows the flow chart of the additional "product market fit" development program;

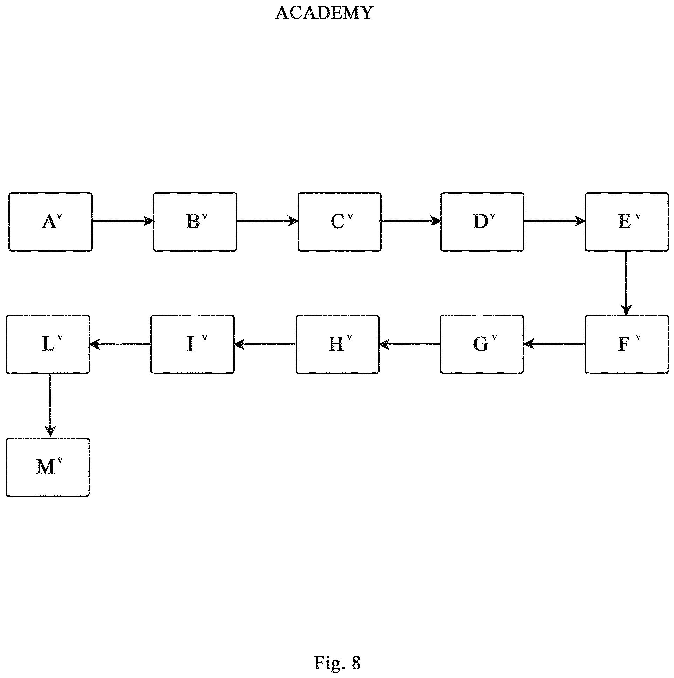

- FIGURE 8 shows the flowchart of the additional "academy" development program;

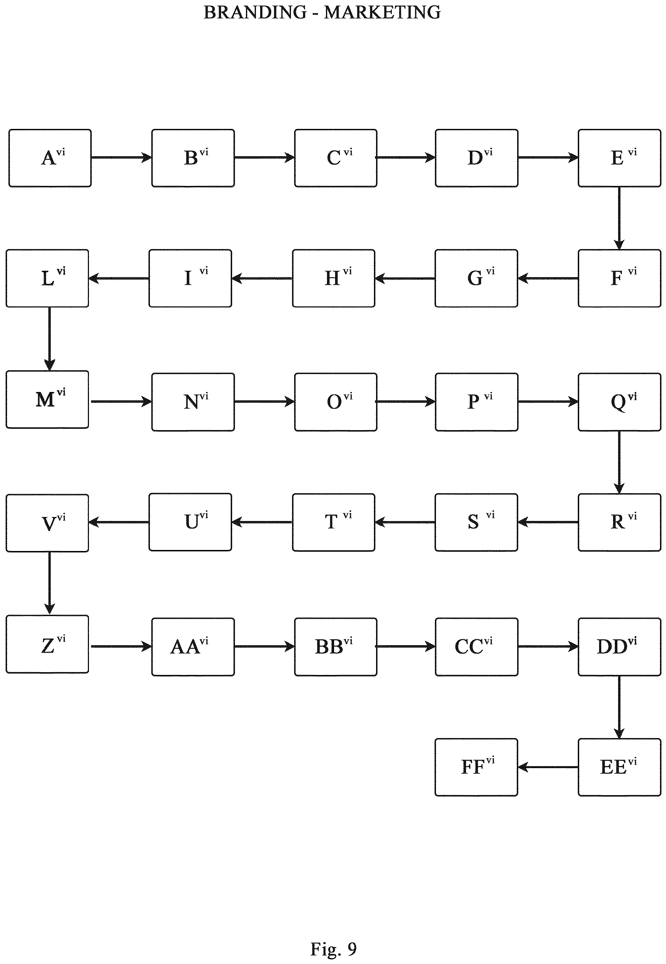

- FIGURE 9 shows the flow chart of the additional "branding" or "marketing" development program.

### Detailed description of the invention

The present invention will now be described purely by way of non-limiting or binding example with the aid of the figures, which illustrate some embodiments relative to the present inventive concept.

With reference to FIG. 3, some electronic devices 1-9'-9" which interact in carrying out the method object of the present invention are shown.

Apart from the portable electronic devices 9'-9", which may consist of common tablets, the electronic device 1 is specifically dedicated to the present invention.

Said portable electronic devices 9'-9" are preset with an App dedicated to carrying out the method, allowing the download of data and files uploaded by said team of professionals by one or more partners 100; the local management of said files by said partners 100 and the sending of further data and files by said partners 100 to said team of professionals and vice versa. In particular, all the activities that are carried out through any of said electronic devices 9'-9" can be monitored through the connected device 1.

More specifically, the App that includes the present invention will allow at least:
- the sharing of documents and information;
- the sharing and constant updating of a Gantt work chart;
- the use of a chat and collaboration platform;
- an accounting system for the project costs;
- a video conference system at the local level between the various partners of the company;
- a video conference system at the local level and between the various members of the team of professionals;
- an inter-company video conference system between the partners of the company which requested the service and the team of professionals.

Said device 1 consists of any rigid support, provided with suitable mechanical means for being stably connected to a vertical surface. Preferably it will consist of a Plexiglas support having dimensions ranging from 30 cm X 50 cm to 100 cm X 160 cm, preferably 70 cm X 100 cm.

In a further embodiment, the device is also integrated in digitized format within the aforementioned App and made usable in real time by means of said electronic devices 9'-9".

Its surface includes at least an area 2 dedicated to the representation of company data and of the project to which the device 1 refers.

Thanks to the presence of means for connection to the electrical network and/or an autonomous battery-operated power supply system, the device 1 integrates a plurality of displays. In detail:
- at least a first display 3, dedicated to the local management of the files by the company's partners 100. In this way, internally, the company can monitor the activity of each partner 100 who has access to said files. Also included is at least one data exchange window with said team of professionals;
- at least a second display 4 adapted to automatically report the date and time of the last updating of the files, displayable and downloadable from said device 1;
- at least a third display 5, managed by said team of professionals, adapted to represent the objectives attained and the already-completed steps of the project;
- at least a fourth display 6, managed by said team of professionals, adapted to represent a countdown to future deadlines and set appointments. This fourth display 6 is adapted to change color as the deadline approaches to attract the attention of the partners 100;
- at least a fifth display 7, managed jointly by the team of professionals and by the partners 100, adapted to schematically represent the business model;
- at least a sixth display 8, managed by said team of professionals, adapted to represent a diagram of radar type which schematizes the attainment percentage of each obj ective.

The data exchange is guaranteed by the presence of Internet connection means 9 integrated in the electronic device 1.

In the preferred embodiment of the electronic device 1 object of the present invention, it also comprises hands-free and video call communication means for the execution of conference calls between the company and the team of professionals.

Finally, it is clear that modifications, additions or variants that are obvious to a person skilled in the art can be made to the invention described so far, without thereby departing from the scope of protection provided by the appended claims.

## Claims

1. Method for monitoring the progress state of a company project by a team of professionals, adapted to allow partners (100) of any company to know, in real time, the deadlines and objectives to be completed for attaining the objectives set by said team of professionals; said project being constituted by the definition of a strategy for company growth and for acquiring clients and investors; said method being **characterized in that** it comprises the steps of:
(A) requiring an intervention by at least one of said partners (100) towards said team of professionals in the company growth sector;
(B) first meeting, during which a monitoring device (1) is delivered to the partners (100), such device to be installed at one's own company office, and portable electronic devices (9'-9") are provided to all the partners (100) and members of the team of professionals; during said first meeting (B), the company objectives are defined, operating on pre-established processes which will comprise, by way of a non-limiting example: problem, customer development, value proposition, assumption, business model, marketing, financial plan, intellectual property, team, operations, traction and fund raising;
(C) first document delivery, during which the team of professionals provides, to the partners (100), the business model and the report of the meeting in a format that can be modified for a joint management; in this step, information documents are also transmitted as well as updates on the subjects of interest for the company;
(D) defining the business model by means of a plurality of meetings or calls with dedicated professionals;
(E) second document delivery, in which the team of professionals provides the partners (100) with the final version of the business model;
(F) delivery of the financial analysis, in which the team of professionals provides to the partners (100) the final version of the financial analysis based on the previously redacted business model;
(G) updating, by means of a plurality of meetings or calls with dedicated professionals;
(H) third document delivery, in which the team of professionals provides, to the partners (100), the final version of the "investor deck", i.e. a document comprising: business plan; financial plan; executive summary, i.e. a summary document of the business plan in a few pages, to be delivered to possible investors; "pitch deck" i.e. a presentation of summary slides of the business idea, always with the purpose of stimulating the curiosity of possible investors; confidentiality agreement; "teaser", i.e. one page of key information, presented in a captivating manner in order to stimulate the reader's curiosity;
(I) updating, by means of a plurality of meetings or calls with dedicated professionals;
(L) final delivery of the final version of the documents previously sent in said third step of document delivery (H);
all the aforesaid steps being monitorable and updated in real time on the dedicated electronic devices (9'-9"-1), provided to all the partners (100) of the company and to all the members of the team of professionals, by means of Apps dedicated for carrying out the present method.

2. Method for monitoring the progress state of a company project, according to the preceding claim 1, **characterized in that** it comprises at least one further step (M) of launching and tutoring the company by said team of professionals; such further activities being personalized based on the company profile and on the growth requirements encountered.

3. Method for monitoring the progress state of a company project, according to the preceding claim 2, **characterized in that** said at least one further step (M) can be constituted by at least one of the following growth programs:
- creation of the company team;
- problem solution fit;
- MVP development;
- product market fit;
- academy;
- branding-marketing;
- mentorship;
- fund raising;
- super coaching;
- compliance and intellectual property.

4. Method for monitoring the progress state of a company project, according to any one of the preceding claims, **characterized in that** it comprises at least one further supervision step (N) which consists of organizing meetings with predefined time deadline, between at least one of said partners (100) and at least one member of said team of professionals in order to verify the correspondence between the business forecasts and the reality and in order to identify possible problems at the outset.

5. Method for monitoring the progress state of a company project, according to any one of the preceding claims, **characterized in that** said team of professionals comprises at least:
- one coach (10) with the role of project manager and for managing the entire process;
- one operative team (20) comprising at least:
• one business advisor (21) adapted to redact the business plan and the documentation accompanying the investor deck;
• one marketing specialist (22) adapted to provide consulting regarding growth strategy;
• one mentor (23) adapted to plan and decide which is the best strategy to adopt, in accordance with the business advisor (21) and the marketing specialist (22);
- one support team (30) comprising at least:
• one junior advisor (31) with role of reporting each meeting, market analysis and preparation of the base of the business model;
• one graphic designer (32) and/or video maker, adapted to prepare the material in a captivating manner in light of the presentation to possible investors.

6. Method for monitoring the progress state of a company project, according to any one of the preceding claims, **characterized in that** said team of professionals comprises at least one auxiliary professional (40), adapted to carry out key roles of professional support for the company depending on the business needs; said at least one auxiliary professional (40) able to be:
a. a "supercoach" (10'), adapted to provide a pre-established number of lesson hours and tutoring on various subjects, close to his/her own sector work experience;
b. an accountant (33), adapted to provide accounting assistance;
c. a growth hacker (34), adapted to provide consulting for company growth with limited budgets and early-stage;
d. an intellectual property consultant (35), adapted to provide assistance in terms of trademarks, patents and design;
e. a lawyer (36), adapted to provide assistance on legal and compliance subjects;
f. an SEO (37), adapted to provide consulting in order to increase the online visibility of the company;
g. various tutors (38), adapted to train the partners (100) during the process regarding the main subjects tied to the startup and marketing world;
h. a web developer (39), adapted to provide services of implementation of the online presence of the company;
i. a financial advisor (24), adapted to consult on financial matters;
j. a digital strategist (25), adapted to plan the marketing and online advertising campaigns.

7. Method for monitoring the progress state of a company project, according to any one of the preceding claims, **characterized in that** the various steps of monitoring and tutoring of the company by said team of professionals occurs according to predefined time deadlines (T1; T2; T3; T4; ...; Tn) starting from said first request step (A) which constitutes the starting date of the project (T0).

8. Device (1) for monitoring the progress state of a company project by a team of professionals, adapted to allow the partners (100) of any company to know, in real time, the deadlines and the objectives to be completed in order to attain the objectives set by a team of professionals; said project being constituted by the definition of a strategy for company growth and for acquiring clients and investors; said device (1) being **characterized in that** it is constituted by any rigid support, provided with suitable mechanical means for being stably connected to a vertical surface, preferably at the office of the company which requested the service by said team of professionals; said device (1) comprising at least one area (2) dedicated to depicting the company data and project data that the device (1) refers to; said device (1) also comprising means for connecting to the power grid and/or an autonomous power supply system, with battery, adapted to allow the operation of a plurality of displays integrated in said device (1); said display comprising:
a. a first display (3), managed by said partners (100), dedicated to the local management of the files by the partners (100) of the company; said first display (3) allowing the monitoring of the activity of each partner (100) who has access to said files; said first display (3) comprising at least one data exchange window with said team of professionals;
b. a second display (4) adapted to automatically report the date and time of the last updating of the files, displayable and downloadable from said device (1);
c. a third display (5), managed by said team of professionals, adapted to represent the objectives attained and the already-completed steps of the project;
d. a fourth display (6), managed by said team of professionals, adapted to represent a countdown for the future deadlines and predetermined appointments; said fourth display (6) being adapted to change color with the approach of the deadline in order to draw greater attention of the partners (100);
e. a fifth display (7), managed jointly by said team of professionals and by said partners (100), adapted to schematically represent the business model;
f. a sixth display (8), managed by said team of professionals, adapted to represent a diagram of radar type which schematizes the attainment percentage of each obj ective;
said device (1) also comprising Internet connection means (9) adapted to allow the exchange of data and files between said partners (100) and said team of professionals.

9. Device (1) for monitoring the progress state of a company project, according to any one of the preceding claims, **characterized in that** it comprises means for connecting to portable electronic devices (9'-9") provided both to members of the team of professionals and to partners (100) of the company which requested the service; said portable electronic devices (9'-9") being preset with an App dedicated for carrying out the method, object of any one of the preceding claims 1 to 7; said App allowing the downloading of data and files, loaded by said team of professionals, by one or more partners (100), the local management of said files by said partners (100) and the sending of further data and files by said partners (100) to said team of professionals and vice versa; any activity carried out by any one of said electronic devices (9'-9"), pertaining to the company connected to said device (1), being monitorable by means of the device (1) itself; said App also including means for allowing at least:
g. the sharing of documents and information;
h. the sharing and constant updating of a Gantt work chart;
i. the use of a chat and collaboration platform;
j . an accounting system for the project costs;
k. a video conference system at the local level between the various partners (100) of the company;
1. a video conference system at the local level and between the various members of the team of professionals;
m. an inter-company video conference system between the partners (100) of the company which requested the service and the team of professionals.

10. Device (1) for monitoring the progress state of a company project, according to any one of the preceding claims 8 or 9, **characterized in that** it comprises speakerphone communication means and video calls for the execution of conference calls.

11. Device (1) for monitoring the progress state of a company project, according to any one of the preceding claims 8 to 10, **characterized in that** it is constituted by a main support made of Plexiglas with dimensions comprised between 30 cm X 50 cm and 100 cm X 160 cm, preferably 70 cm X 100 cm.

12. Device (1) for monitoring the progress state of a company project, according to any one of the preceding claims 8 to 11, **characterized in that** it is integrated in said App.
